# DEMANDE DE BREVET EUROPEEN

(11) **EP 0 592 263 A1**
(43) Date de publication de la demande: **13.04.1994**
(21) Numéro de dépôt: 93402270.8
(22) Date de dépôt: 17.09.1993
(51) Int. Cl.: B65G 61/00, B65G 57/22

(54) **Palettiseur comportant des moyens d'adaptation rapides à un schéma de palettisation et son procédé de mise en oeuvre**

(30) Priorité: 18.09.1992 FR 9211160
(71) Demandeur: NEWTEC INTERNATIONAL, F-78220 Viroflay (FR)
(72) Inventeur: Contini, Alain, F-49300 Cholet (FR)
(74) Mandataire: Orès, Bernard

(57) **Abrégé**

L'invention se rapporte principalement à un palettiseur (1) comportant des moyens (E) d'adaptation rapides à un schéma de palettisation et à un procédé de mise en oeuvre.

L'invention a pour objet un palettiseur (1), caractérisé en ce qu'il comporte des moyens de calcul (39) et une mémoire de masse (45) dans laquelle sont mémorisés des programmes pour déterminer, à partir de la géométrie des colis (4) à palettiser, le ou les schéma(s) de palettisation optimal(aux) à adopter et la configuration du palettiseur (1) correspondante.

Le palettiseur (1) selon l'invention s'applique à la constitution des palettes, notamment avec changement fréquent du schéma de palettisation.

## Description

L'invention se rapporte principalement à un palettiseur comportant des moyens d'adaptation rapides à un schéma de palettisation et à son procédé de mise en oeuvre.

La palettisation des charges prend de plus en plus d'importance, dans la mesure où elle permet de réduire les coûts de la manutention, du stockage et du transport des marchandises. Or, l'industrie et le commerce tentent actuellement d'augmenter la productivité ou la rentabilité par une diminution des stocks. Il en résulte des livraisons fréquentes de faibles quantités correspondant, par exemple, à quelques palettes ou à quelques dizaines de palettes exigeant, au niveau du palettiseur, des changements fréquents des schémas de palettisation.

Un schéma de palettisation acceptable pour chaque type de colis doit conduire à une palette stable et compacte qui ne risque pas de se disloquer pendant la manutention, le stockage et le transport. De plus, il peut s'avérer important de déterminer la masse optimale de chaque palette et donc le nombre de palettes sur lesquelles l'on va répartir la charge. Même un responsable de palettisation très qualifié a besoin d'une réflexion souvent longue avant de pouvoir déterminer un nouveau schéma de palettisation. Ce processus de détermination d'un nouveau schéma de palettisation est décrit notamment dans "La palettisation. 1. Les bases de la palettisation" de Philippe DEVYS édité par Techniques et Documentation (LAVOISSIER) 11, rue Lavoissier 75384 PARIS CEDEX 08 FRANCE.

L'adoption d'un schéma de palettisation préétabli et notamment la configuration du palettiseur peuvent être réalisées dans des délais acceptables par un personnel moins qualifié, mais toute erreur peut provoquer la dislocation des palettes avec dommage aux marchandises palettisées et risque d'accidents corporels dans le cas de l'écoulement d'une palette sur un manutentionnaire. Ce risque est aggravé par le gerbage des palettes.

De plus, fréquemment, ce schéma préétabli ne correspond pas exactement à l'optimum pour la quantité des colis à palettiser. Dans tous les cas, le temps de configuration du palettiseur, dans la mesure où elle est possible, diminue la productivité de l'unité de palettisation.

Il est connu, d'une part, des palettiseurs susceptibles de s'adapter à de très nombreuses configurations nécessaires aux divers schémas de palettisation. Ces palettiseurs comportent un espaceur de retenue des colis à chaque emplacement susceptible de nécessiter de stopper un colis d'une rangée en cours de constitution dans les divers schémas de palettisation. Ces palettiseurs peuvent comporter jusqu'à trente espaceurs équipés de leurs vérins de commande, ce qui en augmente considérablement l'encombrement, la masse et le prix de revient.

D'autre part, l'on connaît des palettiseurs dont les possibilités de configuration sont limitées.

C'est par conséquent un but de la présente invention d'offrir un palettiseur susceptible de s'adapter rapidement à une charge à palettiser.

C'est également un but de la présente invention d'offrir un palettiseur minimisant le risque d'erreurs de configuration lors de son adaptation à un schéma de palettisation.

C'est aussi un but de la présente invention d'offrir un palettiseur susceptible de fonctionner avec un personnel moins qualifié.

C'est également un but de la présente invention d'offrir un palettiseur assurant l'optimisation du schéma de palettisation en fonction de la géométrie et/ou de la masse des colis à palettiser et avantageusement du nombre de ces colis, de leurs masses et de leurs encombrements et/ou du traitement ultérieur de la palette (manutention, stockage, transport).

C'est aussi un but de la présente invention d'offrir un palettiseur de construction simple et d'un coût de revient faible.

C'est également un but de la présente invention d'offrir un palettiseur n'exerçant que des contraintes limitées sur les colis.

Ces buts sont atteints par l'intégration au palettiseur de moyens de calcul du schéma de palettisation optimal et de moyens d'affichage de la configuration du palettiseur ou de moyens de configuration automatique du palettiseur.

Avantageusement, le palettiseur selon l'invention comporte des éléments, avantageusement des espaceurs, déplaçables en fonction du schéma de palettisation à réaliser.

Les colis sont avantageusement soumis à des contraintes moins sévères par un pousseur de colis et/ou des rangées de type bielle manivelle sans guidage linéaire, ce qui, de plus, en simplifie la construction.

L'invention a principalement pour objet un palettiseur, caractérisé en ce qu'il comporte des moyens de calcul et une mémoire de masse dans laquelle sont mémorisés des programmes pour déterminer, à partir de la géométrie des colis à palettiser, le ou les schéma(s) de palettisation optimal(aux) à adopter et la configuration du palettiseur correspondante.

L'invention a également pour objet un palettiseur, caractérisé en ce qu'il comporte un automate programmable de commande d'actionneurs et en ce que lesdits moyens de calcul comportent un micro-ordinateur relié par une liaison de communication à l'automate programmable.

L'invention a également pour objet un palettiseur, caractérisé en ce que le micro-ordinateur comporte des moyens permettant à un opérateur de commander l'automate programmable.

L'invention a également pour objet un palettiseur, caractérisé en ce que les moyens de calcul comportent des moyens d'affichage, de préférence un écran comportant un tube à rayon cathodique, permettant d'indiquer à l'opérateur la configuration du palettiseur à mettre en oeuvre correspondant au schéma de palettisation adopté.

L'invention a également pour objet un palettiseur, caractérisé en ce qu'il comporte des actionneurs permettant, sous commande, de préférence de l'automate programmable, de configurer le palettiseur pour l'exécution du schéma de palettisation déterminé.

L'invention a également pour objet un palettiseur, caractérisé en ce que le micro-ordinateur est relié directement, ou par l'intermédiaire de l'automate programmable à des capteurs du palettiseur, en ce que l'ordinateur est muni de moyens pour interpréter les signaux provenant des capteurs et, si cela s'avère nécessaire, élaborer des signaux d'alarme si un dysfonctionnement est détecté.

L'invention a également pour objet un palettiseur, caractérisé en ce que le micro-ordinateur est relié, directement ou par l'intermédiaire de l'automate programmable à des capteurs du palettiseur, et en ce que, après l'arrêt d'un cycle de fonctionnement automatique, il affiche les mesures à prendre en vue de la reprise du cycle de fonctionnement automatique du palettiseur.

L'invention a également pour objet un palettiseur, comportant des espaceurs comprenant une came susceptible de prendre, sur consigne d'un organe de commande, une première configuration érigée pour arrêter la progression des colis et une seconde configuration escamotée ne s'opposant pas au passage des colis, caractérisé en ce qu'il comporte des moyens de guidage des espaceurs entre une pluralité de positions prédéterminées correspondant à une pluralité d'emplacements des espaces introduits dans une palette constituée.

L'invention a également pour objet un palettiseur, caractérisé en ce qu'il comporte, mémorisé dans une mémoire de masse, un nombre fini, de préférence supérieur à 50, de préférence supérieur à 100, de géométries et de schémas de palettisation optimisés correspondants, en ce qu'il comporte des moyens de calcul pour déterminer quelle est la géométrie mémorisée la plus proche de la géométrie d'un colis à palettiser, et en ce qu'il effectue la lecture dans la mémoire de masse et de préférence l'affichage sur un écran du schéma de palettisation correspondant.

L'invention a également pour objet un procédé de palettisation, caractérisé en ce qu'il comporte les étapes consistant à :
a) introduire dans des moyens de calcul intégrés au palettiseur les caractéristiques des colis à palettiser, notamment leur géométrie ;
b) déterminer à partir desdites caractéristiques des colis à palettiser, le schéma de palettisation optimal correspondant ;
c) palettiser les colis selon le schéma de palettisation optimal déterminé à l'étape b).

L'invention a également pour objet un procédé, caractérisé en ce qu'il comporte entre les étapes b) et c) les étapes consistant à :
d) déterminer la configuration optimale du palettiseur correspondant au schéma de palettisation optimal ;
e) configurer manuellement le palettiseur selon la configuration déterminée en d) affichée sur un dispositif d'affichage par des moyens de calcul, notamment en positionnant des espaceurs et en effectuant le réglage des conformateurs.

L'invention a également pour objet un procédé, caractérisé en ce qu'il comporte entre les étapes b) et c) les étapes consistant à :
d) déterminer la configuration optimale du palettiseur correspondant au schéma de palettisation optimal ;
e) configurer le palettiseur selon la configuration déterminée en d) en commandant des actionneurs nécessaires par un automate programmable du palettiseur.

L'invention sera mieux comprise au moyen de la description ci-après et des figures annexées données comme des exemples non limitatifs et sur lesquelles :
- la figure 1 est une vue schématique en perspective d'un exemple de réalisation du palettiseur selon l'invention ;
- la figure 2 est une vue schématique en perspective d'un premier exemple de réalisation d'un espaceur susceptible d'être mis en oeuvre dans un palettiseur selon la présente invention ;
- la figure 3 est une élévation frontale schématique d'un deuxième exemple de réalisation d'un espaceur susceptible d'être mis en oeuvre dans un palettiseur selon la présente invention ;
- la figure 4 est une élévation schématique illustrant le fonctionnement de l'espaceur et d'un pousseur d'un palettiseur selon la présente invention ;
- la figure 5 est une élévation latérale d'un pousseur susceptible d'être mis en oeuvre dans un palettiseur selon la présente invention ;
- la figure 6 est un schéma d'une unité de calcul et de commande susceptible d'être mis en oeuvre dans le palettiseur selon la présente invention.

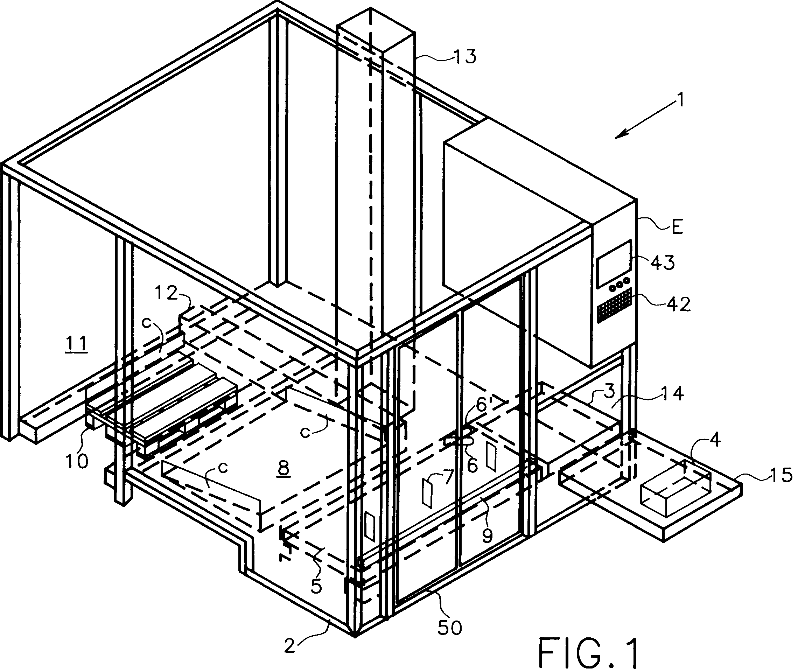

Sur les figures 1 à 6, l'on a utilisé les mêmes références pour désigner les mêmes éléments.

Sur la figure 1, l'on peut voir un palettiseur 1 selon l'invention comportant à l'intérieur d'une enceinte de protection 2 une table d'entrée 3 des colis 4, une table d'accumulation 5, avantageusement à rouleaux motorisés, muni d'une butée de pivotement escamotable 6 et d'espaceurs escamotables 7, un plateau de dépose de couches 8, un pousseur de rangées 9, des moyens (non illustrés) de transfert des couches complètes du plateau de dépose de couches 8 vers une palette 10 préalablement amenée à un poste de palettisation 11.

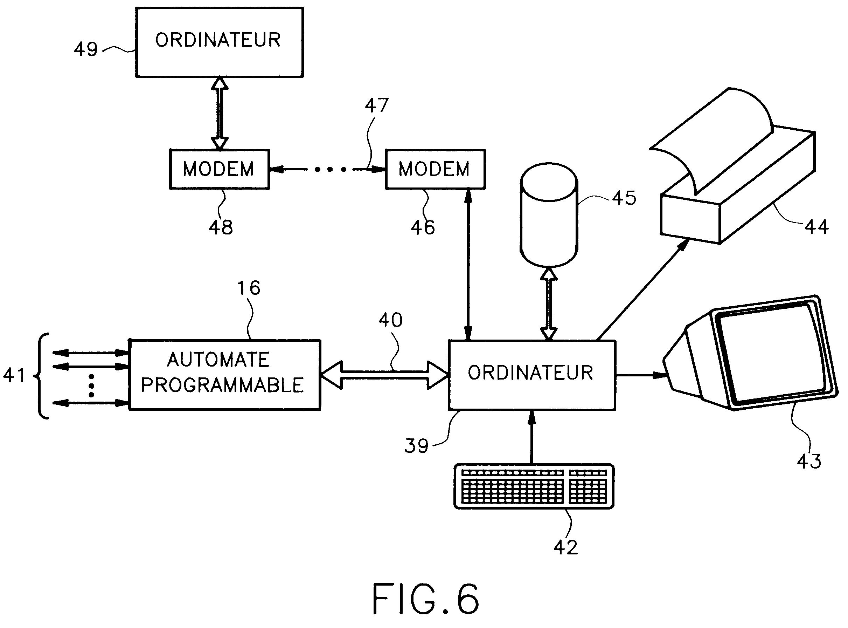

Le plateau 8 à dépose de couches est relié par un châssis élévateur 12, avantageusement à bras unique, à une colonne 13 formant un bâti fixe vertical de guidage. Une ouverture 14 ménagée dans l'enceinte de protection 2 permet le passage des colis 4 à partir d'un tapis cadenceur 15. Un automate programmable 16, par exemple l'automate programmable commercialisé par la Société TELEMECANIQUE sous la référence TSX 17-20 ou commercialisé par la Société SIEMENS sous la référence 100U (figure 6) logé dans une armoire électrique E assure la commande et la synchronisation des divers actionneurs et moteurs (non représentés) du palettiseur.

Nous allons expliquer brièvement ci-après le fonctionnement classique du palettiseur 1.

Les colis 4 à palettiser sont amenés par le tapis cadenceur 15 et pénètrent dans l'enceinte 2 par l'ouverture 14 pour être déposés sur la table d'entrée 3.

En variante, selon la disposition des locaux, l'ouverture 14 peut être disposée dans le prolongement de la table d'accumulation 5 et de la table d'entrée 3.

La table d'entrée 3, avantageusement munie de rouleaux motorisés, assure le transfert des colis 4 sur la table d'accumulation 5.

Il est bien entendu qu'un palettiseur 1 dépourvu d'une table d'entrée 3 ne sort pas du cadre de la présente invention.

Lors de la constitution d'une rangée de colis 4, selon le schéma de palettisation adopté, notamment lors de la constitution d'une palette croisée, il peut être nécessaire d'orienter des colis. Pour ce faire, l'automate programmable 16 commande un actionneur, typiquement un vérin, assurant la sortie d'une butée de pivotement escamotable 6 qui est disposée sur le trajet d'une partie des colis 4. Au contraire, si le colis 4 ne doit pas subir de rotation, la butée est escamotée, et porte la référence 6' sur la figure 1.

De même, dans certains schémas de palettisation, notamment lors de la constitution d'une palette croisée, il peut s'avérer nécessaire d'introduire des espaces entre colis 4. Pour ce faire, l'automate programmable 16 commande un actionneur, typiquement un vérin, assurant la sortie de la came d'arrêt de l'espaceur 7 correspondant. Lorsque l'on ne désire pas la présence d'espaces entre colis, les cames de tous les espaceurs 7 sont escamotées.

Lorsqu'une rangée complète est constituée, le pousseur de rangées 9, sur commande de l'automate programmable 16, pousse la rangée sur le plateau 8 de dépose de couches. Il en est de même pour les rangées suivantes, jusqu'à la constitution d'une couche complète.

La première couche complète est transférée sur une palette 10 par un pousseur de couches et est conformée par des conformateurs C portés par le châssis élévateur 12 et/ou par le plateau 8. Ce transfert est avantageusement facilité par une légère pente de la face supérieure du plateau 8 de dépose de couches. Simultanément, l'on constitue la première rangée de la couche suivante.

Si la cohésion de la palette risque d'être compromise par le glissement relatif des colis 4, notamment dans le cas de palettes colonnaires, l'on dépose entre les couches un intercalaire, par exemple constitué par une feuille de papier ou de carton.

De manière analogue, l'on dépose une pluralité de couches jusqu'à la constitution de la palette complète.

La palette constituée est évacuée du palettiseur. Une palette vide est amenée au poste de palettisation 11.

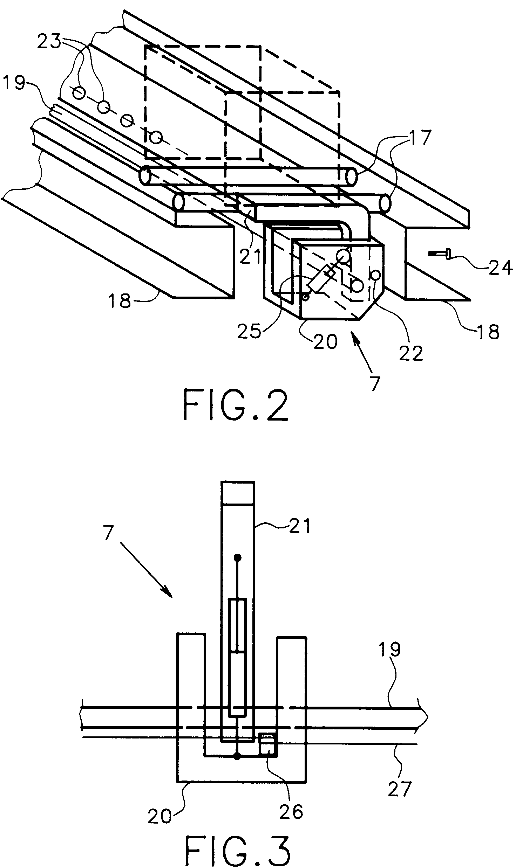

Sur la figure 2, l'on peut voir le premier exemple de réalisation des espaceurs 7 susceptibles d'être mis en oeuvre dans les palettiseurs selon l'invention.

Les espaceurs 7 sont montés au niveau de la table d'accumulation 5 qui comportent des rouleaux motorisés 17 montés entre deux longerons parallèles 18.

Une tige de guidage 19 est disposée sous les rouleaux 17 parallèlement aux longerons 18.

Chaque espaceur 7 comporte un boîtier 20 sensiblement en forme de parallélépipède rectangle ouvert sur deux côtés adjacents et une came d'arrêt 21 des colis 4, en forme de L dépassant par les côtés ouverts du boîtier 20. Des ouvertures alignées pratiquées dans le boîtier 20 et une extrémité libre de la base de la came 21 permettent d'enfiler l'espaceur 7 sur la tige de guidage 19.

Un trou taraudé 22 est pratiqué dans le bâti 20 et des ouvertures 23 sont ménagées, de préférence à intervalles réguliers, sur un des longerons 18, permettant la solidarisation du boîtier 20 par rapport à ce longeron 18 en vissant une vis 24 dans le trou taraudé 22 à travers une ouverture 23. Avantageusement, les vis 24 sont imperdables. Par exemple, à chaque ouverture 23 est attachée une vis 24.

Lorsque l'on retire la vis 24, l'espaceur 7 (boîtier 20 et came 21) peut coulisser sur la tige de guidage 19, une des faces du parallélépipède rectangle prenant appui sur le longeron 18. Les emplacements des ouvertures 23 déterminent les positions possibles sur la table d'accumulation 5 de l'espaceur 7.

Avantageusement, à chaque intervalle, repérée par un numéro d'ordre, entre deux rouleaux 17, correspond une ouverture 23 ; il en résulte qu'il est possible de disposer d'un espaceur 7, de manière que, dans la condition active, la came 21 se trouve, selon l'ouverture 23 mise en oeuvre, entre une paire quelconque des rouleaux 17 successifs.

Le bâti 20 est relié à la came 21 par un vérin 25 dont la variation de longueur, sur commande de l'automate programmable 16, assure la rotation de la came 21 autour de la tige 19 avec le passage de la condition active érigée à la condition non active escamotée sous les rouleaux 17 ou vice versa. Le vérin 25 est connecté à une source de fluide sous pression, par exemple par une conduite tubulaire flexible non représentée, ne gênant pas le déplacement de l'espaceur 7 sur la tige de guidage 19.

Il est bien entendu que des variantes de réalisation d'espaceurs 7 susceptibles d'être déplacés entre diverses positions sur un palettiseur, ne sortent pas du cadre de la présente invention. Par exemple, il est possible, sans sortir du cadre de la présente invention, de mettre en oeuvre un espaceur 7 comportant un rail de guidage en translation et un axe distant de rotation de la came par rapport au boîtier.

De même, comme illustré sur la figure 3, le déplacement des espaceurs 7 sur le palettiseur peut être motorisé et exécuté sur commande de l'automate programmable 16.

Les espaceurs 7 comportent un actionneur 26, par exemple un moteur pas à pas ou un moteur frein dont l'axe, ou l'axe de son réducteur, se termine par un cabestan sur lequel est enroulé un câble de traction 27 tendu sous la table d'accumulation 5 parallèlement à la tige 19. La rotation du moteur 26, sur commande de l'automate programmable 16, assure le déplacement de l'espaceur 7 jusqu'à un emplacement désiré.

Il est bien entendu que d'autres types d'entraînement des espaceurs 7, comportant par exemple des galets, des courroies et/ou des crémaillères et des engrenages, ne sortent pas du cadre de la présente invention.

Avantageusement, les conformateurs C, constitués par des tôles planes, et, notamment, le conformateur avant fixé sur le châssis élévateur 12 et les conformateurs latéraux fixés sur le plateau de dépose de couches 8, comportent des moyens de guidage en translation perpendiculairement au plan du conformateur. Par exemple, les moyens de fixation du conformateur comportent une pluralité d'encoches repérées et des moyens de verrouillage des conformateurs dans une des encoches, notamment des goupilles. Le conformateur arrière monté sur le châssis élévateur 12 est escamoté lors du transfert de couches du plateau 8 sur la palette 10. Le conformateur arrière est érigé après le transfert de la couche sur la palette pour participer avec le conformateur avant et les conformateurs latéraux à la conformation de la couche, c'est-à-dire pour donner à la couche des colis les dimensions désirées. La course du conformateur arrière est réglable entre une pluralité de positions prédéterminées.

Selon les dimensions des couches à palettiser, l'on effectue le réglage de chaque conformateur à la position prédéterminée correspondant au schéma de palettisation adopté.

Selon un premier exemple de réalisation du palettiseur selon la présente invention, le déplacement de l'espaceur 7 des figures 2 ou 3 est effectué en boucles ouvertes, c'est-à-dire que l'automate programmable ne vérifie pas les positions effectivement occupées par les espaceurs 7. Dans un tel cas, une erreur de positionnement humaine dans le cas de la figure 2, ou un mauvais étalonnage du palettiseur dans le cas de la figure 3, se solde par une palette mal constituée, ce qui, dans la plupart des cas, sera immédiatement remarqué par l'opérateur.

Dans une deuxième variante de réalisation, le palettiseur selon la présente invention comporte des moyens de détection, par exemple un codeur de position magnétique permettant de connaître avec exactitude la position de chaque espaceur. Dans le cas illustré sur la figure 3, le palettiseur 1 effectue les corrections nécessaires à l'obtention des positions désirées de l'espaceur et/ou aux schémas de palettisation adoptés.

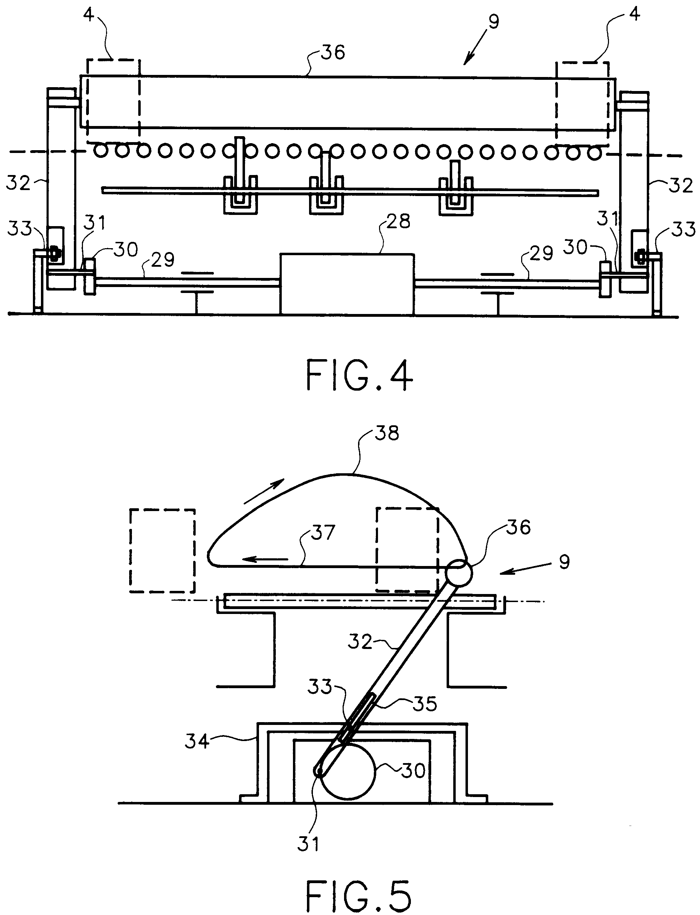

Le palettiseur 1 selon l'invention présente des performances élevées tout en étant d'un faible prix de revient. Il comporte avantageusement un pousseur selon l'invention que l'on peut voir sur les figures 4 et 5, de type bielle manivelle, sans guidage en translation autre que le mécanisme bielle manivelle lui même.

Le pousseur 9 comporte un actionneur, par exemple, un moteur 28 entraînant en rotation deux arbres 29 alignés disposés de part et d'autre du moteur 28.

A une extrémité de chaque arbre 29, est disposé un plateau 30 équipé d'un doigt excentrique 31. Une première extrémité d'une bielle 32 est attachée au doigt excentrique 31. Un doigt de guidage fixe 33 solidarisé avec un bâti 34 passe dans une rainure de guidage 35 ménagée dans la bielle 32, parallèlement à son axe. Les deuxièmes extrémités des bielles 32 sont solidarisées avec une barre 36 susceptible de prendre appui sur la face arrière des colis 4 pour leur appliquer la force de poussée.

Le moteur 28 assure, sur commande de l'automate programmable, la rotation d'un tour de l'arbre 29 et des plateaux 30 communiquant à la barre 36 un mouvement sensiblement rectiligne 37 suivi par un mouvement de retour courbe 38.

La poussée progressive exercée par le pousseur 9 selon la présente invention diminue les contraintes exercées sur les colis. La mise en oeuvre du doigt de guidage 33 de la rainure de guidage 35 permet de supprimer les moyens de guidage en translation du pousseur 9, ce qui en diminue la masse, l'encombrement et le coût de revient.

Ce mécanisme de bielle manivelle est donc particulièrement adapté au palettiseur selon la présente invention. Toutefois, il peut, sans aucune difficulté, être adapté à la plupart des palettiseurs, notamment aux palettiseurs comportant des pousseurs de rangées de colis.

Avantageusement, comme illustré sur la figure 6, le palettiseur selon l'invention comporte des moyens de calcul pour assister l'opérateur lors de l'établissement du schéma de palettisation et/ou de la configuration du palettiseur. Dans l'exemple de réalisation avantageux illustré sur la figure 6, le palettiseur comporte un micro-ordinateur 39 relié par une liaison 40, par exemple une liaison série de type RS232 ou, avantageusement une liaison dite "MODBUS", à l'automate programmable 16. L'automate programmable est relié par liaison 41 de type connu aux actionneurs et/ou aux capteurs du palettiseur. Le micro-ordinateur 39 est relié à des moyens de saisie, par exemple à un clavier 42 notamment à un clavier étanche à 60 touches vendu par la Société STORM et à des moyens d'affichage comportant un écran 43, avantageusement de type tube à rayons cathodiques, et/ou à une imprimante 44. La mise en oeuvre d'autres dispositifs de communication avec les micro-ordinateurs 39, comme par exemple des boules de commande (trackball en terminologie anglo-saxonne) ou des écrans tactiles, ne sort pas du cadre de la présente invention.

L'ordinateur 39 comporte une mémoire de masse 45.

Avantageusement, l'ordinateur 39 est relié à un modem 46 susceptible d'être relié par une ligne téléphonique 47 à un modem 48 lui-même connecté à un ordinateur 49. Les possibilités de communication à distance de l'ordinateur 39 permettent, d'une part, la télémaintenance du palettiseur à partir d'un ordinateur appartenant à une société de service, ou au service de télémaintenance du constructeur. Dans un tel cas, l'ordinateur 39 comporte avantageusement un programme d'auto-test et de test du palettiseur permettant de transmettre à l'ordinateur 49 les statuts des programmes mis en oeuvre et des divers actionneurs ou détecteurs du palettiseur. Un opérateur de l'ordinateur 49, ou l'ordinateur 49 lui-même, permet, d'une part, de diagnostiquer une panne éventuelle et, d'autre part, d'apporter une assistance à I'opérateur du palettiseur 1. De plus, le modem 46 permet le chargement à partir de l'ordinateur 49 de nouvelles versions du programme de fonctionnement de l'ordinateur 39 et/ou de l'automate programmable 16. De même, l'ordinateur 39 peut être relié à un ordinateur superviseur ou à un ordinateur du client pour qui l'on effectue la palettisation. Il est bien entendu que la mise en oeuvre de réseau local (LAN en terminologie anglo-saxonne) ou de liaison série entre ordinateurs ne sort pas du cadre de la présente invention.

Le micro-ordinateur 39 est, par exemple, un micro-ordinateur industriel prévu pour fonctionner en environnement hostile d'un atelier, basé sur un micro-processeur appartenant à la famille vendue par la Société INTEL sous les références 80286, 386 ou 486 ; le micro-ordinateur tourne avantageusement sous le système d'exploitation commercialisé sous la marque MS-DOS par la Société MICROSOFT.

La mise en oeuvre du micro-ordinateur 39 permet, d'une part, de disposer d'une puissance de calcul importante pour un faible prix et, d'autre part, de bénéficier des outils de programmation, des générateurs de programme et/ou des générateurs de systèmes experts permettant de construire facilement et donc pour un coût de revient relativement modéré de l'application d'assistance à l'opérateur du palettiseur. Toutefois, il est bien entendu qu'un palettiseur dont l'automate programmable 16 apporte l'assistance à l'opérateur, ce qui permet d'économiser l'incorporation du micro-ordinateur, ne sort pas du cadre de la présente invention.

Dans une première variante de réalisation, le micro-ordinateur 39 comporte un programme d'optimisation d'un schéma de palettisation, mémorisé dans une mémoire de masse 45, par exemple dans un disque dur ou en mémoire morte avantageusement de type programmable (PROM, EPROM ou EEPROM en terminologie anglo-saxonne). A partir de la taille de la palette, de la dimension du colis, du débordement autorisé éventuel ou au contraire du retrait souhaité, le micro-ordinateur 39 détermine toutes les configurations possibles. Avantageusement, l'ordinateur 39 tient compte de la précision maximale du palettiseur lors du placement des colis sur la palette. Dans une étape ultérieure, le micro-ordinateur détermine la configuration optimale choisie en fonction des critères courants de l'homme du métier, à savoir l'élimination des palettes instables ou risquant de se disloquer lors de la manutention du stockage ou du transport et obtenir une palette la plus compacte possible comportant un maximum de colis.

Avantageusement, le micro-ordinateur 39 calcule une représentation graphique de la palette optimale pour contrôle visuel par l'opérateur.

Dans une deuxième variante de réalisation, l'on stocke dans la mémoire de masse 45 du micro-ordinateur 39 le schéma de palettisation optimisé précalculé pour chaque dimension de colis comprise entre une dimension minimale par exemple égale à 100 mm x 200 mm x 100 mm et une dimension maximale par exemple égale à 200 mm x 500 mm x 500 mm avec une résolution (variation minimale entre deux colis en longueur, largeur ou hauteur) égale par exemple à 1 mm. Avantageusement, les représentations graphiques des palettes optimisées sont stockées dans la mémoire de masse 45 du micro-ordinateur 39. Les dimensions des colis à palettiser, communiquées à l'ordinateur 39 par l'opérateur, sont comparées avec les divers modèles stockés. L'ordinateur 39 choisit le modèle de colis dont les dimensions se rapprochent le plus des dimensions du colis réelles indiquées par l'opérateur. L'ordinateur 39 choisit le schéma de palettisation optimisé stocké correspondant au modèle de colis choisi.

L'ordinateur 39 détermine l'enchaînement des séquences nécessaires à la réalisation de la palette constituée, les organes nécessaires à la palettisation ainsi que les divers organes (butée de pivotement, espaceur 7, conformateur) à mettre en oeuvre.

L'ordinateur 39 communique à l'automate programmable 16, le programme de palettisation à mettre en oeuvre ou l'adresse de ce programme dans la mémoire de base de l'automate programmable 16.

Dans une première variante, le micro-ordinateur 39 affiche le réglage du palettiseur 1 à effectuer pour la mise en oeuvre du nouveau schéma de palettisation.

Dans une deuxième variante, l'ordinateur 39 communique à l'automate programmable 16, le programme ou l'adresse du programme dans la mémoire de masse de l'automate 16 nécessaire à la réalisation de la configuration du palettiseur.

Dans une variante de réalisation particulièrement performante du palettiseur selon la présente invention, le micro-ordinateur 39 comporte un système expert, par exemple, le système expert réalisé à l'aide d'un générateur de systèmes experts commercialisé par Electricité de France sous le nom GENESIA I ou GENESIA II dont la base de règle comporte les règles habituelles d'un expert en palettisation dont quelques exemples sont donnés ci-après :
R1 - Un léger débordement et avantageux pour le transport en wagon de chemin de fer.
R2 - Un retrait est avantageux pour le transport par camion.
R3 - Le croisement des colis sur une surface importante augmente le frottement s'opposant au glissement des colis les uns par rapport aux autres.
R4 - Une cassure risque de compromettre la stabilité de la palette pendant et après le soulèvement par un chariot élévateur.

Les systèmes experts implémentés dans l'ordinateur 39 déterminent, à partir de la base des règles et des informations fournies par l'opérateur (dimension des colis, type de manipulations, stockage et transport que doit pouvoir subir la palette...), quel est le schéma de palettisation optimal parmi les divers schémas de palettisation calculés par l'ordinateur 39.

Avantageusement, le micro-ordinateur 39 effectue une impression à l'aide de l'imprimante 44 d'une fiche technique de palettisation et/ou d'un dessin illustrant le chargement des palettes sur un moyen de transport.

Avantageusement, le micro-ordinateur 39 déclenche une alarme, par exemple sonore et/ou visuelle avec affichage sur l'écran 43, dans le cas où il détermine, à partir des signaux transmis par les capteurs à l'automate programmable 16, l'existence d'un défaut, comme, par exemple, la présence d'un colis coincé, l'ouverture de la porte 50 de l'enceinte 2 du palettiseur 1 en cours de fonctionnement ou le manque d'intercalaires dans un dispositif d'alimentation en intercalaires (non représentés).

Avantageusement, le dialogue avec l'opérateur s'effectue par l'intermédiaire de menus. Par exemple, un menu principal propose à l'opérateur :
1° - CREATION SCHEMA - correspondant à la création d'un nouveau schéma de palettisation ;
2° - SELECTION OU SCHEMA - correspondant à la sélection d'un schéma de palettisation créé antérieurement ;
3° - VISUALISATION DEFAUT - correspondant à l'affichage d'un texte décrivant la nature d'un défaut en cours et/ou la façon d'y remédier (aide en ligne à l'exploitation du palettiseur) ;
4° - VISUALISATION ET CORRECTION COMPTEUR - correspondant à la visualisation d'un compteur du palettiseur et notamment les compteurs permettant la synchronisation des divers éléments du palettiseur (nombre de couches sur la palette, nombre de colis en préparation) ainsi qu'éventuellement des compteurs pour le traitement statistique ou la gestion (nombre de colis traités, nombre de palettes traitées, temps de fonctionnement et la possibilité de leurs mises à jour) ;
5° - VISUALISATION, ETAPE ACTIVE, GRAFCET - correspondant à l'affichage en clair de la séquence en cours de réalisation, repérée, sur un organigramme, en clair ou par son numéro, à l'écran, ou dans la notice d'utilisation du palettiseur ;
6° - ASSISTANCE REDEMARRAGE - correspondant à une aide en lignes de redémarrage du palettiseur ;
7° - COMMANDE FIN DE SERIE - correspondant à la commande du palettiseur pour une fin de série, notamment avec un nombre de colis insuffisant pour constituer une palette complète ;
8° - COMMANDE MANUELLE - correspondant au passage en commande manuelle du palettiseur permettant notamment la commande directe par frappe des touches du clavier 42 des divers actionneurs du palettiseur 1 ;
9° - CADENCE MACHINE - correspondant à la visualisation de la cadence de fonctionnement du palettiseur ;
10° - TEST A VIDE - correspond à la manoeuvre du palettiseur sans colis pour simuler des cycles de fonctionnement automatiques.

Lors de la première palettisation d'un nouveau colis, I'opérateur choisit l'option 1° - CREATION SCHEMA. L'ordinateur affiche des questions concernant les dimensions du colis (longueur, largeur, hauteur). Selon l'exemple de réalisation, ces questions sont avantageusement complétées par des questions concernant les types de transport, de stockage et de manutention, le poids de chaque colis, le nombre de colis et/ou le sens d'arrivée des colis (en long ou en large). Alternativement, l'on demande à l'opérateur s'il autorise un débordement des colis de la palette. L'opérateur indique sur le clavier 42 les réponses aux questions posées et valide la réponse donnée. L'ordinateur affiche un ou plusieurs schémas de palettisation possibles. L'opérateur choisit le schéma désiré ou valide, dans le cas où un seul schéma de palettisation lui est proposé. L'ordinateur affiche alors sur l'écran les caractéristiques complètes du schéma et le réglage à effectuer sur le palettiseur. Avantageusement, l'ordinateur affiche des questions demandant le nombre de couches désirées et/ou si l'on désire disposer des intercalaires entre les couches. L'opérateur indique à l'ordinateur le nombre de couches par palette et les couches sur lesquelles le palettiseur doit déposer un intercalaire. L'opérateur indique le nom du nouveau schéma pour son utilisation future. Le programme retourne au menu général.

Le choix et la mise en oeuvre d'un schéma s'effectue par l'option 2° du menu général - SELECTION SCHEMA. Le micro-ordinateur 39 affiche sur l'écran 43 les divers schémas de palettisation stockés. L'opérateur sélectionne le schéma désiré, en tapant le nom du schéma ou sélectionne le nom et/ou la représentation graphique du schéma avec un dispositif de pointage. L'ordinateur 39 affiche sur l'écran 43 les caractéristiques complètes du schéma de palettisation avantageusement accompagnées d'une représentation graphique et des indications concernant les réglages nécessaires à la configuration du palettiseur. Par exemple, il indique le nombre et les positions des espaceurs 7 à mettre en oeuvre, la position des divers conformateurs, la cadence maximale à utiliser pour un schéma de palettisation donné et le nombre de couches. Dans la variante entièrement automatique du palettiseur selon la présente invention, l'on effectue un transfert vers l'automate qui effectue la configuration du palettiseur et enchaîne par la palettisation.

Dans l'exemple de réalisation manuelle, I'opérateur effectue les réglages nécessaires à la configuration du palettiseur et effectue un transfert vers l'automate programmable 16, une fois le réglage effectué pour débuter la palettisation.

Avantageusement, I'ordinateur 39 détermine, à partir du nombre de colis et des schémas de palettisation possibles, la répartition des colis à palettiser entre palettes pour aboutir à une dernière palette comportant le nombre de colis le plus proche possible du nombre des colis portés par les autres palettes.

D'une manière classique, les palettiseurs sont pourvus de détecteurs permettant d'assurer le fonctionnement avec une bonne efficacité et dans de bonnes conditions de sécurité. Avantageusement, l'ordinateur 39 et/ou l'automate programmable 16 comportent des moyens d'acquisition des données concernant l'état des divers capteurs. Par exemple, un colis coincé sera détecté par une cellule photo-électrique et, de façon classique, provoquera l'arrêt du palettiseur. En outre, I'opérateur sera averti, par exemple, par un signal sonore et/ou lumineux. Avantageusement, dans un tel cas, l'ordinateur affiche automatiquement l'option N° 3 - VISUALISATION DEFAUT - permettant à l'opérateur d'identifier rapidement les défauts ayant provoqué l'arrêt du palettiseur et indiquant les remèdes à apporter pour pouvoir redémarrer en toute sécurité.

Par exemple, en cas d'incident sur le moteur, l'ordinateur indique que la cause est un blocage ou une surcharge et propose de supprimer la cause du blocage ou de la surcharge, d'ouvrir l'armoire électrique et de ré-armer le disjoncteur correspondant. Avantageusement, les opérations à effectuer sont illustrées par un schéma graphique.

Lorsque l'ordinateur a détecté un manque d'air, il indique les causes probables, à savoir l'arrêt du compresseur, la rupture d'une canalisation ou d'une vanne fermée, et il propose à l'opérateur de remédier à la défaillance du circuit d'air.

De même, lorsqu'un dispositif d'arrêt d'urgence a été actionné l'ordinateur l'indique à l'opérateur et propose à l'opérateur de désenclencher l'arrêt d'urgence correspondant.

Lorsque l'ordinateur détecte qu'une porte de l'enceinte de sécurité a été ouverte, il l'indique à l'opérateur et propose à l'opérateur de refermer la porte.

Lorsque le faisceau d'une cellule photo-électrique est coupé par un dispositif anti-chute, l'ordinateur indique à l'opérateur que l'anti-chute n'est pas en position éclipsée par suite d'un blocage et propose à l'opérateur de débloquer le dispositif anti-chute.

Lorsque le gabarit de palettes n'est pas respecté, l'ordinateur indique la présence d'une palette ou d'un obstacle devant la cellule du gabarit et propose de remettre la palette en position de palettisation ou de retirer l'obstacle.

Lorsque l'ordinateur repère que l'élévateur est en surcourse haute ou repère la présence d'un obstacle à la descente de l'élévateur, il indique à l'opérateur qu'il faut dégager l'élévateur et que c'est une opération délicate normalement réservée au personnel d'entretien.

Cette opération comporte les étapes consistant à :
- actionner et maintenir le commutateur "dégagement de sécurité",
- mettre le palettiseur en autorisation de marche,
- sélectionner le fonctionnement manuel,
- sélectionner la commande manuelle "montée élévateur" pour se dégager d'un mou de chaîne ou "descente élévateur" pour se dégager de la sécurité haute (voir ci-après les opérations manuelles),
- actionner et maintenir la commande d'action manuelle,
- relâcher le commutateur "dégagement de sécurité", le palettiseur restant en "autorisation de marche",
- démarrer le cycle automatique de palettisation.

Lorsqu'une cellule d'évacuation ne communique pas de signal à l'ordinateur, celui-ci indique à l'opérateur que le barrage cellule d'évacuation de palettes est occulté, que les cellules sont déréglées ou hors service, et il propose à l'opérateur de nettoyer, de régler ou de vérifier le fonctionnement des cellules de barrage.

Lorsqu'une cellule de gabarit de rangée a détecté une mauvaise constitution de rangée avant la poussée sur la table de constitution de couches, l'ordinateur l'indique à l'opérateur et propose à l'opérateur de reconstituer manuellement la rangée.

Lors de l'arrêt d'un cycle automatique, l'ordinateur indique qu'un bouton poussoir d'arrêt de cycle automatique a été actionné pour passer en cycle manuel ou qu'un défaut a été détecté. Il propose à l'opérateur de supprimer le défaut, de ré-armer l'autorisation de marche, de passer en automatique et d'appuyer sur le bouton poussoir "départ de cycle automatique".

Lorsque l'automate programmable a perdu la référence du niveau sur lequel doit être déposée la couche en cours, I'ordinateur indique à l'opérateur la perte du niveau de dépose de la couche et la possibilité de blocage des plateaux de dépose de couche. Il propose à l'opérateur de débloquer les plateaux de dépose de couche et/ou de descendre en manuel les châssis élévateurs jusqu'au niveau de dépose de la couche en cours.

Lorsque l'ordinateur a détecté le mauvais fonctionnement d'un pousseur, il indique à l'opérateur un blocage de la translation du pousseur, le blocage de l'élévation du pousseur ou le mauvais fonctionnement du détecteur et propose à l'opérateur de débloquer le pousseur ou de régler les détecteurs.

Lorsque l'ordinateur a repéré le blocage d'un conformateur, il en avertit l'opérateur et propose à I'opérateur de débloquer le conformateur.

Lorsque les résultats de comptage sont incohérents, l'ordinateur avertit l'opérateur qu'un colis est bloqué devant une des cellules de comptage, qu'une cellule de comptage est déréglée ou que deux colis sont rentrés ensemble dans le palettiseur et ont été détectés comme un colis unique. L'ordinateur propose à l'opérateur de débloquer l'éventuel colis bloqué et de vérifier le compteur de colis par rapport au nombre de colis réellement présents dans le palettiseur.

Lorsque le palettiseur s'arrête par suite du manque de palettes dans le distributeur de palettes vides, l'ordinateur l'indique à l'opérateur et propose à l'opérateur de mettre une pile de palettes vides et d'appuyer sur le poussoir "départ de cycle automatique".

Lorsque le palettiseur ne peut pas mettre sur une couche un intercalaire désiré, il indique à l'opérateur la perte ou le manque d'intercalaires et propose à I'opérateur de remplir le magasin d'intercalaires ou de remettre en place un intercalaire tombé dans le magasin.

Avantageusement, l'ordinateur indique en permanence sur l'écran 43, lorsque cela ne gêne pas d'autres opérations d'affichage, les trois derniers défauts survenus au cours du fonctionnement du palettiseur.

L'option N° 5 - VISUALISATION, ETAPE ACTIVE, GRAFCET - permet de voir, par exemple, les étapes de préparation de couches, de prise de palettes, de prise d'intercalaires, de dépose de couches et d'évacuation de palettes.

L'option N° 6 - ASSISTANCE REDEMARRAGE - permet de redémarrer le fonctionnement automatique interrompu, par exemple par suite d'un incident. L'on minimise ainsi le temps d'immobilisation du palettiseur en remettant à zéro l'automatisme, recalant mécaniquement le palettiseur et, soit vidangeant totalement le palettiseur, soit en reprenant la palettisation à l'endroit où elle a été arrêtée. L'ordinateur indique, par exemple, le nombre de couches déposées sur la palette, la présence ou l'absence de couches sur le plateau de dépose de couches, le nombre de colis présents sur le plateau de dépose de couches et le nombre de colis sur la table d'accumulation 5. L'opérateur vérifie si les chiffres résultant du comptage du palettiseur correspondent à la réalité et, éventuellement, introduit des corrections. Il indique également à l'ordinateur si le redémarrage doit être suivi d'une vidange. Eventuellement, I'ordinateur indique à l'opérateur qu'il doit retirer les colis se trouvant dans un module de retournement. L'opérateur valide le menu et commande la mise en mode automatique du palettiseur.

Lorsque le nombre de colis à palettiser n'est plus suffisant pour constituer une palette complète, I'opérateur arrête le cycle automatique de fonctionnement du palettiseur et sélectionne la septième option - COMMANDE FIN DE SERIE - qui permet de vidanger le palettiseur et d'évacuer la palette.

Pour remédier à un incident, effectuer des réglages ou vérifier un bon fonctionnement, il peut être utile de sélectionner la huitième option - COMMANDE MANUELLE - qui permet de commander individuellement les divers actionneurs du palettiseur. Il est à noter que ce fonctionnement permet d'outrepasser certains dispositifs de sécurité et requiert donc l'attention et le contrôle visuel de I'opérateur. De même, en fin de cycle manuel, et avant de passer en cycle automatique, I'opérateur doit s'assurer que le palettiseur est dans une configuration compatible avec le cycle à exécuter ou passer à l'option 6 - ASSISTANCE REDEMARRAGE -. Dans une variante de réalisation, lors du redémarrage de cycle automatique, I'automate programmable 16 effectue au préalable la configuration nécessaire.

Le mode de commande manuelle permet de commander, par exemple :
- le module de groupage (notamment la table d'accumulation 5),
- l'avance de pousseur de rangée,
- le recul de pousseur de rangée,
- la montée de l'élévateur,
- la descente de l'élévateur,
- l'ouverture du plateau de dépose de couches,
- la fermeture du plateau de dépose de couches,
- l'ouverture de conformateurs de couches,
- la fermeture de conformateurs de couches,
- la prise de palettes vides,
- la dépose de palettes vides,
- la montée du dispositif de transfert de palettes,
- la descente du dispositif de transfert de palettes vides,
- l'avance du dispositif de transfert de palettes vides,
- le recul du dispositif de palettes vides,
- la prise d'intercalaires, et
- la dépose d'intercalaires.

La neuvième option permet de visualiser les quantités de produits passés sur le palettiseur, par exemple durant les dernières 24 heures avec un total et une moyenne horaire, par exemple pour les dernières huit heures.

Le palettiseur selon l'invention s'applique à la constitution des palettes, notamment avec changement fréquent du schéma de palettisation.

## Revendications

1. Palettiseur, caractérisé en ce qu'il comporte des moyens de calcul (39) et une mémoire de masse (45) dans laquelle sont mémorisés des programmes pour déterminer, à partir de la géométrie des colis (4) à palettiser, le ou les schéma(s) de palettisation optimal(aux) à adopter et la configuration du palettiseur (1) correspondante.

2. Palettiseur selon la revendication 1, caractérisé en ce qu'il comporte un automate programmable (16) de commande d'actionneurs et en ce que lesdits moyens de calcul (39) comportent un micro-ordinateur relié par une liaison de communication (40) à l'automate programmable (16).

3. Palettiseur selon la revendication 2, caractérisé en ce que le micro-ordinateur (39) comporte des moyens permettant à un opérateur de commander l'automate programmable (16).

4. Palettiseur selon l'une quelconque des revendications précédentes, caractérisé en ce que les moyens de calcul (39) comportent des moyens d'affichage (43), de préférence un écran comportant un tube à rayon cathodique, permettant d'indiquer à l'opérateur la configuration du palettiseur (1) à mettre en oeuvre correspondant au schéma de palettisation adopté.

5. Palettiseur selon la revendication 1, 2 ou 3, caractérisé en ce qu'il comporte des actionneurs permettant, sous commande, de préférence de l'automate programmable (16), de configurer le palettiseur (1) pour l'exécution du schéma de palettisation déterminé.

6. Palettiseur selon l'une quelconque des revendications 2 à 5, caractérisé en ce que le micro-ordinateur (39) est relié directement, ou par l'intermédiaire de l'automate programmable (16) à des capteurs du palettiseur, en ce que l'ordinateur est muni de moyens pour interpréter les signaux provenant des capteurs et, si cela s'avère nécessaire, élaborer des signaux d'alarme si un dysfonctionnement est détecté.

7. Palettiseur selon l'une quelconque des revendications 2 à 6, caractérisé en ce que le micro-ordinateur (39) est relié, directement ou par l'intermédiaire de l'automate programmable (16) à des capteurs du palettiseur, et en ce que, après l'arrêt d'un cycle de fonctionnement automatique, il affiche les mesures à prendre en vue de la reprise du cycle de fonctionnement automatique du palettiseur.

8. Palettiseur selon l'une quelconque des revendications précédentes, comportant des espaceurs (7) comprenant une came (21) susceptible de prendre, sur consigne d'un organe de commande (16), une première configuration érigée pour arrêter la progression des colis (4) et une seconde configuration escamotée ne s'opposant pas au passage des colis (4), caractérisé en ce qu'il comporte des moyens de guidage (19) des espaceurs (7) entre une pluralité de positions prédéterminées correspondant à une pluralité d'emplacements des espaces introduits dans une palette constituée.

9. Palettiseur selon l'une quelconque des revendications précédentes, caractérisé en ce qu'il comporte, mémorisé dans une mémoire de masse (45), un nombre fini, de préférence supérieur à 50 de préférence supérieur à 100, de géométries et de schémas de palettisation optimisés correspondants, en ce qu'il comporte des moyens de calcul pour déterminer quelle est la géométrie mémorisée la plus proche de la géométrie d'un colis à palettiser, et en ce qu'il effectue la lecture dans la mémoire de masse (45) et de préférence l'affichage sur un écran (43) du schéma de palettisation correspondant.

10. Procédé de palettisation, caractérisé en ce qu'il comporte les étapes consistant à :
a) introduire dans des moyens de calcul (39) intégrés au palettiseur (1) les caractéristiques des colis à palettiser, notamment leur géométrie ;
b) déterminer à partir desdites caractéristiques des colis à palettiser, le schéma de palettisation optimal correspondant ;
c) palettiser les colis selon le schéma de palettisation optimal déterminé à l'étape b).

11. Procédé selon la revendication 10, caractérisé en ce qu'il comporte entre les étapes b) et c) les étapes consistant à :
d) déterminer la configuration optimale du palettiseur (1) correspondant au schéma de palettisation optimal ;
e) configurer manuellement le palettiseur (1) selon la configuration déterminée en d) affichée sur un dispositif d'affichage (43) par des moyens de calcul, notamment en positionnant des espaceurs (7) et en effectuant le réglage des conformateurs.

12. Procédé selon la revendication 10, caractérisé en ce qu'il comporte entre les étapes b) et c) les étapes consistant à :
d) déterminer la configuration optimale du palettiseur (1) correspondant au schéma de palettisation optimal ;
e) configurer le palettiseur (1) selon la configuration déterminée en d) en commandant des actionneurs nécessaires par un automate programmable (16) du palettiseur (1).
